(19) Europäisches Patentamt
European Patent Office
Office européen des brevets

(11) Veröffentlichungsnummer : **0 175 106**
**B1**

(12) # EUROPÄISCHE PATENTSCHRIFT

(45) Veröffentlichungstag der Patentschrift : **27.07.88**

(21) Anmeldenummer : **85109572.9**

(22) Anmeldetag : **30.07.85**

(51) Int. Cl.[4] : **C 08 L 71/04**, C 08 J 3/20 // C08L71:04, C08L25:06, C08L9:06, C08K3:00

(54) **Thermoplastische Massen auf Basis von Polyphenylenethern, Styrolhomopolymerisaten und pulverförmigem, füllstoffhaltigen Kautschuk sowie Verfahren zu ihrer Herstellung.**

(30) Priorität : **21.09.84 DE 3434705**

(43) Veröffentlichungstag der Anmeldung : **26.03.86 Patentblatt 86/13**

(45) Bekanntmachung des Hinweises auf die Patenterteilung : **27.07.88 Patentblatt 88/30**

(84) Benannte Vertragsstaaten : **AT BE DE FR GB IT NL SE**

(56) Entgegenhaltungen :
**EP-A- 0 086 955**
**DE-B- 1 932 234**

(73) Patentinhaber : **HÜLS AKTIENGESELLSCHAFT**
**- RSP Patente / PB 15 - Postfach 13 20**
**D-4370 Marl 1 (DE)**

(72) Erfinder : **Jadamus, Hans, Dr.**
**Hervester Strasse 8**
**D-4370 Marl (DE)**
Erfinder : **Feinauer, Roland, Dr.**
**Flämingstrasse 34**
**D-4370 Marl (DE)**

**EP 0 175 106 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Thermoplastische Massen, die sich zur Herstellung von Formteilen eignen und die Styrolpolymerisate und Polyphenylenether enthalten, sind erstmalig in der deutschen Patentschrift DE-PS 16 94 257 beschrieben worden.

Die in der DE-PS 21 19 301 beanspruchten thermoplastischen Massen bestehen aus Polyphenylenethern mit einem kautschukmodifizierten Polystyrol und/oder einem Polystyrol und einem Kautschuk. Für Massen, bei denen der mittlere Teilchendurchmesser der dispergierten elastomeren Phase unter maximal etwa 2 µm liegt, werden höhere Schlagzähigkeiten geltend gemacht.

Es ist bekannt, daß man Polymermischungen zur Verbesserung ihrer physikalischen Eigenschaften Füllstoffe, wie z. B. Metalle, Titandioxid, Asbest, Glasfasern, Calcium- und Aluminiumsilikate (DE-OSS 27 13 462, 27 52 383 und 28 40 111), zusetzen kann. Mit Aluminiumflocken, Kohlenstoffasern und Ruß läßt sich eine elektrische Abschirmwirkung der aus den Massen erhaltenen Formkörper erzielen.

Die füllstoffhaltigen thermoplastischen Massen werden hergestellt, indem man die Bestandteile durchmischt, die erhaltene geschmolzene Vormischung zu einem Strang extrudiert und diesen zu einem Granulat zerschneidet (vgl. DE-OS 27 13 462).

Von erheblicher wirtschaftlicher Bedeutung sind Polymermischungen auf Basis von Polyphenylenethern, die sich durch ein bestimmtes Maß an Kerbschlagzähigkeit und Wärmeformbeständigkeit auszeichnen. Im Prinzip lassen sich derartige Mischungen aus Polyphenylenethern und schlagfesten Styrolpolymerisaten mit unterschiedlichen Kautschukgehalten herstellen. Dieser Weg ist aber aufwendig, da zahlreiche Polystyroltypen bereit gehalten werden müssen, um die jeweils gewünschten Qualitäten einstellen zu können.

Es wäre einfacher, könnte man unterschiedliche Typen durch Abmischen von wenigen Ausgangskomponenten, insbesondere unter Verwendung von Styrolhomopolymerisaten, herstellen.

Eine nachträgliche Einarbeitung von Kautschuk in Polystyrol ist zwar technisch möglich, doch ist zu berücksichtigen, daß der Kautschuk, der üblicherweise in Ballenform vorliegt, schwer handhabbar ist.

Grundsätzlich könnte man nun auch daran denken, Kautschuk in Pulverform einzusetzen, der unterschiedliche Mengen an Füllstoffen enthält.

In der einschlägigen Literatur sind indessen keine Beispiele bekannt, wonach derartige Kautschuke mit Polyphenylenethern und Styrolhomopolymerisaten zu Polymermischungen verarbeitet werden könnten. Es ist lediglich bekannt, daß pulverförmige füllstoffhaltige Kautschuke auch bestimmte Anteile von Thermoplasten, wie Polyvinylchlorid, Polystyrol oder Polymethylmethacrylat, enthalten können (vgl. DE-PS 16 94 918), aber diese Schrift vermochte dem Fachmann keine konkrete Anregung zu vermitteln, zumal sich das in dieser Schrift beschriebene Verfahren in der Praxis nicht hat durchsetzen können.

Versuche der Anmelderin zeigten weiterhin, daß pulverförmige füllstoffhaltige Kautschuke auf Basis von Naturkautschuk in Abmischungen mit Polyphenylenethern und Styrolhomopolymerisaten Formmassen mit erheblich verringerter Kerbschlagzähigkeit ergeben. Mit pulverförmigen Kautschuken auf Basis von Polybutadien wurden gleichfalls unbefriedigende Ergebnisse erhalten. Es schien daher wenig aussichtsreich, Polymermischungen aus Polyphenylenethern, Styrolhomopolymerisaten und pulverförmigem füllstoffhaltigen Kautschuk herzustellen.

Ziel der vorliegenden Erfindung war es, Polymermischungen hoher Wärmeformbeständigkeit und einstellbarer Schlagzähigkeit auf Basis von Polyphenylenethern (PPE), Styrolhomopolymerisaten (PS), Kautschuk (K) und Füllstoffen herzustellen.

Es wurde jetzt gefunden, daß es möglich ist, Polyphenylenether mit Styrolhomopolymerisaten und einem bestimmten pulverförmigen füllstoffhaltigen SBR-Kautschuk zu verarbeiten. Dieser Kautschuk enthält als Füllstoffe Ruß, Kieselsäure und/oder Silikate. Er wird erhalten, indem man

a) einer Füllstoff-Suspension soviel Mineralsäure zusetzt, daß nach der anschließenden Zugabe eines wasserlöslichen Aluminiumsalzes und von Wasserglas ein pH-Wert von 3,0 bis 3,7 erreicht wird,

b) diese Füllstoff-Suspension mit

— einem Kautschuk-Latex, einer Kautschuk-Lösung oder dessen wäßriger Emulsion

— einem wasserlöslichen Aluminiumsalz und

— Wasserglas

vereint und hierbei soviel Mineralsäure zusetzt, daß in der erhaltenen Mischung ein pH-Wert von 3,0 bis 3,7 eingehalten wird,

c) den anfallenden, füllstoffhaltigen SBR-Kautschuk von der wäßrigen Phase abtrennt und trocknet.

Untersuchungen zeigen, daß beispielsweise der Ruß bei der Einarbeitung nicht diffus in der Phase aus Polyphenylenethern und Polystyrol verteilt wird. Vielmehr bildet sich offensichtlich neben dieser Phase eine weitere Phase von mit Ruß verstärkten Kautschukteilchen aus (siehe Abb. 1).

Dies ist überraschend und mag die Ursache dafür sein, daß sich die erhaltenen Formteile durch erstaunlich hohe Wärmeformbeständigkeit bei gleichzeitig hoher Schlagzähigkeit auszeichnen.

Gegenstand der Erfindung sind die in den Ansprüchen 1 bis 10 beschriebenen thermoplastischen Massen sowie die Verfahren nach den Ansprüchen 11 und 12.

Es ergeben sich somit folgende Vorteile :

1. Es können gezielt Polymermischungen eingestellt werden, deren Formmassen eine vorgegebene

Wärmeformbeständigkeit und Schlagzähigkeit aufweisen. Dies wird durch alleinige Veränderung des Mischungsverhältnisses Polyphenylenether/Styrolhomopolymerisat/pulverförmiger füllstoffhaltiger SBR-Kautschuk erreicht.

2. Der Ersatz von Styrolhomopolymerisaten durch pulverförmigen füllstoffhaltigen SBR-Kautschuk führt nicht, wie man erwartet hätte, zu einer Verringerung der Wärmeformbeständigkeit. Man erhält bessere Kerbschlagzähigkeiten (vgl. Beispiel 5 und 6 mit C).

3. Der Zusatz von pulverförmigem füllstoffhaltigen SBR-Kautschuk führt zu einer Erhöhung der Kerbschlagzähigkeit.

Unter thermoplastischen Massen sollen im Rahmen dieser Erfindung ungeformte Mischungen angesehen werden, die sich durch thermoplastische Verarbeitung zu Formteilen oder zu Halbzeug verarbeiten lassen. Die thermoplastischen Massen können beispielsweise als Granulat vorliegen.

Als Polyphenylenether kommen Polyether auf Basis von diorthosubstituierten Phenolen infrage, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein α-ständiges tertiäres Kohlenstoffatom besitzen, Halogenkohlenwasserstoffe und Phenylreste tragen. So kommen infrage: Poly(2,6-dichlor-1,4-phenylenether), Poly(2,6-diphenyl-1,4-phenylenether), Poly(2,6-dimethyl-1,4-phenylenether), Poly(2,6-dibrom-1,4-phenylenether). Vorzugsweise wird der Poly(2,6-dimethyl-1,4-phenylenether) eingesetzt, insbesondere ein solcher mit einer Grenzviskosität von 0,40 bis 0,65 dl/g (gemessen in Chloroform bei 25 °C).

Die Polyphenylenether können z. B. in Gegenwart von komplexbildenden Mitteln, wie Kupferbromid und Morpholin, aus den Phenolen hergestellt werden (vgl. DE-OS 32 24 692 und 32 24 691).

Die Styrolhomopolymerisate werden in bekannter Weise aus Styrol durch radikalische Masse- oder Suspensionspolymerisation hergestellt. Ihre Molekularmassen liegen zwischen 150 000 und 300 000 (vgl. Kunststoff-Handbuch, Band V, Polystyrol, Carl Hanser Verlag München, 1969 und Ullmanns Encyklopädie der technischen Chemie, 4. Auflage, Band 19, Verlag Chemie, Weinheim 1980).

Im Rahmen dieser Erfindung verwendet man einen pulverförmigen füllstoffhaltigen SBR-Kautschuk, der in der Regel auch nach Lagerung noch rieselfähig ist (vgl. DE-OS 28 22 148). Dieser Kautschuk enthält als Füllstoffe Ruß, Kieselsäure und/oder Silikate. Er wird erhalten, indem man

a) einer Füllstoff-Suspension soviel Mineralsäure zusetzt, daß nach der anschließenden Zugabe eines wasserlöslichen Aluminiumsalzes und von Wasserglas ein pH-Wert von 3,0 bis 3,7 erreicht wird,

b) diese Füllstoff-Suspension mit

— einem Kautschuk-Latex, einer Kautschuk-Lösung oder dessen wäßriger Emulsion

— einem wasserlöslichen Aluminiumsalz und

— Wasserglas

vereint und hierbei soviel Mineralsäure zusetzt, daß in der erhaltenen Mischung ein pH-Wert von 3,0 bis 3,7 eingehalten wird,

c) den anfallenden, füllstoffhaltigen SBR-Kautschuk von der wäßrigen Phase abtrennt und trocknet.

Der mittlere Durchmesser der Teilchen (Volumenmittel) soll unter 1 mm liegen, andererseits sollen die Teilchen vorzugsweise nicht so klein sein, daß es bei Mischungsvorgängen zu starker Staubentwicklung kommt. Die Mooney-Viskosität des Polymerbestandteils des pulverförmigen füllstoffhaltigen Kautschuks ML (1 + 4) 100 °C liegt zwischen 40 und 120 (vgl. Mooney Rubber Chem. Techn. 30, 460 (1957).

Es handelt sich um einen Kautschuk auf Basis von Styrol und Butadien, vorzugsweise um einen Kautschuk, der durch Polymerisation in Emulsion hergestellt wurde und kurz als E-SBR-Kautschuk bezeichnet wird. Er enthält 15 bis 40 Gewichtsprozent Styrol und 85 bis 60 Gewichtsprozent Butadien. Der Massenanteil des pulverförmigen füllstoffhaltigen SBR-Kautschuks in den thermoplastischen Massen liegt zwischen 0,5 und 50, vorzugsweise zwischen 10 und 25 %.

Als Füllstoffe des Kautschuks kommen Silikate, vorzugsweise aber Ruß und Kieselsäure, infrage. Auch Mischungen dieser Füllstoffe sind möglich. Bezüglich weiterer Einzelheiten wird auf die DE-OS 28 22 148 verwiesen. Der Massenanteil des Füllstoffs im eingesetzten pulverförmigen füllstoffhaltigen SBR-Kautschuk liegt zwischen 10 und 80, vorzugsweise zwischen 30 und 60 %.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen.

Als Flammschutz kommen aromatische Phosphorverbindungen der allgemeinen Formel

$$R_1 - \underset{R_2}{\overset{O}{\overset{\|}{P}}} - R_3$$

infrage, worin $R_1$, $R_2$ und $R_3$ gleich oder verschieden sein können und Aryl, Alkyl, Cycloalkyl, alkylsubstituiertes Aryl, halogensubstituiertes Aryl, arylsubstituiertes Alkyl, Halogen, Wasserstoff, die entsprechenden Aryloxy-, Alkyl- oxy-, Cycloalkyloxy-Reste und deren Kombinationen sind, wobei mindestens ein Rest ein Aryl- oder Aryloxy-Rest ist und die Gesamtzahl der C-Atome von $R_1$, $R_2$ und $R_3$ insgesamt 30 nicht überschreitet, wie beispielsweise Triphenylphosphinoxid, Phenylbisdodecylphosphat, Phenylbisneopentylphosphat, Phenylethylenhydrogenphosphat, Phenyl-bis(3,5,5'-trimethylhexyl)-phosphat), Ethyldiphenylphosphat, 2-Ethylhexyldi(p-tolyl)phosphat, Diphenylhydrogenphosphat, Bis(2-ethylhexyl)p-tolylphosphat, Tritolylphosphat, Bis(2-ethylhexyl)phenylphosphat, Phenylmethylhydrogenphosphat, Di(dodecyl)p-tolylphosphat, Tricresylphosphat, Triphenylphosphat, Dibutylphenylphosphat, 2-Chlorethyldiphenylphosphat, p-Totyl-bis(2,5,5'-trimethylhexyl)phosphat, 2-Ethylhexyldiphenylphosphat und Diphenylhydrogenphosphat.

Besonders geeignet sind Phosphorverbindungen, bei denen jedes R ein Aryloxy- oder ein Aryl-Rest ist, wie Triphenylphosphinoxid und Triphenylphosphat.

Man kann auch ein übliches halogenhaltiges Flammschutzmittel verwenden. Infrage kommen dabei Halogen enthaltende organische Verbindungen, wie sie z. B. in der Monographie von H. Vogel « Flammenfestmachen von Kunststoff », Hüthig-Verlag, 1966, auf den Seiten 94 bis 102 beschrieben wird. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas-, Kohlenstoff- und Metallfasern, Metallschuppen, insbesondere aus Aluminium, Mineralien und Ruße.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Man stellt die Formmassen wie üblich auf Vorrichtungen her, die ein homogenes Mischen der Komponenten zulassen, wie Kneter, Extruder oder Walzenmischgeräte. Bei diesem Vorgang wird der pulverförmige füllstoffhaltige Kautschuk in der Polymermatrix dispergiert. Bevorzugt sind kontinuierliche Kneter, wie z. B. Doppelschneckenkneter.

Man kann die Formmassen entweder direkt aus Polyphenylenethern, Styrolhomopolymerisaten und pulverförmigem füllstoffhaltigen SBR-Kautschuk herstellen. Man kann aber auch von einer Schmelzmischung (PPE + PS) ausgehen und diese dann mit weiteren Styrolhomopolymerisaten und pulverförmigem füllstoffhaltigen SBR-Kautschuk umschmelzen. Diese Arbeitsweise hat den Vorteil, daß man die günstige Darstellungsweise der Schmelzmischungen aus Polyphenylenethern und Styrolpolymerisaten ausnutzen kann (vgl. DE-OS 33 37 629 sowie DE-OS 31 31 440).

In der fertigen Formmasse ist der füllstoffhaltige SBR-Kautschuk feindispers verteilt. Die Form der Teilchen unterscheidet sich in charakteristischer Weise von Kautschukteilchen, die über schlagzäh modifiziertes Polystyrol (HIPS) eingebracht werden. Während letztere Teilchen als zellige Kugeln oder Ellipsoide beschrieben werden können, sind die füllstoffhaltigen SBR-Kautschukteilchen unregelmäßig begrenzte, kompakte Körper unterschiedlicher Ausdehnung, deren Volumen in der Regel unter 30 $\mu m^3$, vorzugsweise unter 10 $\mu m^3$, liegt. Besonders bevorzugt werden Massen, bei denen das größte Volumen der Kautschukteilchen unter 1 $\mu m^3$ liegt.

Die erfindungsgemäßen Massen lassen sich nach den für die Thermoplastverarbeitung üblichen Verfahren, wie z. B. Extrusion und Spritzgießen, verarbeiten.

I Herstellung der Komponenten

Beispiel 1.1

Einen Polyphenylenether mit einem J-Wert von 55 $cm^3/g$ (bestimmt in Chloroform nach DIN 53 728) erhielt man durch oxidative Kupplung von 2,6-Dimethylphenol-Abstoppung der Reaktion und anschließender Reaktionsextraktion gemäß DE-OS 33 13 864 und DE-OS 33 32 377. Gemäß deutscher Patentanmeldung P 33 37 629.8 wurde eine Mischung von Polyphenylenether und Polystyrol (siehe Beispiel 2.1) im Massenverhältnis 55 : 45 hergestellt.

Beispiel 1.2

Einen Polyphenylenether mit einem J-Wert von 55 $cm^3/g$ (bestimmt in Chloroform nach DIN 53 728) erhielt man durch oxidative Kupplung von 2,6-Dimethylphenol, Abstoppung der Reaktion und anschließender Reaktionsextraktion gemäß DE-OS 33 13 864 und DE-OS 33 32 377 und Fällung durch Methanol.

Beispiel 2.1

Als Styrolhomopolymerisat wird Vestyron® 114 der Fa. Chemische Werke Hüls AG, D-4 370 Marl, eingesetzt. Die Kenndaten dieses Produktes sind in der Broschüre « Kunststoffe von hüls », Vestyron®, Ausgabe September 1983, angegeben.

Beispiel 2.2

Als Styrolhomopolymerisat wird Vestyron® 325 der Fa. Chemische Werke Hüls AG, D-4 370 Marl, eingesetzt. Die Kenndaten dieses Produktes sind in der Broschüre « Kunststoffe von hüls », Vestyron® Ausgabe September 1983, angegeben.

Beispiel 3.1

Ein pulverförmiger Naturkautschuk, der 31,5 Gewichtsprozent Ruß entsprechend ASTM Nr. N-339 enthielt, wurde gemäß DE-OS 28 22 148 erhalten.

Beispiel 3.2

Ein pulverförmiger E-SBR-Kautschuk (auf Basis von 23,5 % Styrol und 76,5 % Butadien), der 41 % Ruß entsprechend ASTM Nr. N-339 enthielt, wurde gemäß DE-OS 28 22 148 erhalten.

II Herstellung und Prüfung der Polymermischungen

Aus 100 Massenteile der Summe von Polyphenylenether, Styrolhomopolymerisat und füllstoffhaltiger SBR-Kautschuk kommen noch folgende Zusatzstoffe in den angegebenen Mengen :

0,5 Massenteile Didecylphenylphosphit
0,5 Massenteile Octadecyl-3-(3,5-di-tert.-butyl-4-hydroxyphenyl)-propionat
1,5 Massenteile Vestowax® AO 1 539

Vestowax® AO 1 539 ist ein Produkt der Chemische Werke Hüls AG, D-4 370 Marl. Es handelt sich um ein Wachs mit Molekulargewicht 1 500, das durch Oxidation von Polyethylen erhalten wird.

Für die Fertigung der schlagzähen polymeren Mischungen benutzte man einen ZSK 30 Doppelschneckenkneter der Firma Werner u. Pfleiderer mit Förder-, Knet- und Entgasungszonen.

Die Bestandteile wurden mechanisch gemischt und in dem genannten Gerät umgeschmolzen, wobei einheitlich eine Zylindertemperatur von 250 °C und eine Schneckendrehzahl von 250 $min^{-1}$ verwendet wurde. Die austretenden Schmelzstränge wurden nach üblichem Verfahren granuliert. Man trocknete sie bei 110 °C bis zu einer Feuchte von weniger als 0,05 %.

Für die Bestimmung der Kerbschlagzähigkeit nach DIN 53 453 verarbeitet man das Granulat auf einer Spritzgußmaschine bei einer Zylindertemperatur von 240 bis 260 °C und einer Werkzeugtemperatur von 90 °C zu Normkleinstäben.

Die Vicat-Erweichungstemperatur nach Din 53 460 bestimmte man an 4 mm dicken Preßplatten, die man bei 250 °C hergestellt hatte.

(Siehe Tabelle Seite 6 f.)

Tabelle

Kerbschlagzähigkeit und Wärmeformbeständigkeit der Polymermischungen

| Beisp. | Komponenten gemäß den Beispielen | Massenverhältnis PPE/ PS/K | Kerbschlagzähigkeit DIN 53 453 in $mJ/mm^2$ | Vicat-Erweichungstemperatur nach DIN 53 460 in $^{o}C$ | |
|---|---|---|---|---|---|
| | | | | A | B |
| 4 | 1.1 + 2.1 + 3.2 | 34 / 56 / 10 | 6.5 | 135 | 122 |
| A | 1.1 + 2.1 | 34 / 66 / 0 | 2.1 | 126 | 121 |
| B | 1.1 + 2.1 + 3.1 | 34 / 56 / 10 | 2.2 | 134 | 123 |
| 5 | 1.2 + 2.2 + 3.2 | 34 / 56 / 10 | 5.2 | 122 | 116 |
| 6 | 1.2 + 2.2 + 3.2 | 34 / 46 / 20 | 15.7 | 134 | 122 |
| C | 1.2 + 2.2 | 34 / 66 / 0 | 2.0 | 115 | 108 |

**Patentansprüche**

1. Thermoplastische Formmassen aus Gemischen von Polyphenylenethern, Polystyrol und Kautschuk, Füllstoffen und weiteren Zusatzstoffen, dadurch gekennzeichnet, daß die Gemische
— Polyphenylenether,
— Styrolhomopolymerisate und
— einen pulverförmigen SBR-Kautschuk enthalten,
wobei dieser Kautschuk als Füllstoffe Ruß, Kieselsäure und/oder Silikate enthält und dadurch erhalten wird, daß man
a) einer Füllstoff-Suspension soviel Mineralsäure zusetzt, daß nach der anschließenden Zugabe eines wasserlöslichen Aluminiumsalzes und von Wasserglas ein pH-Wert von 3,0 bis 3,7 erreicht wird,
b) diese Füllstoff-Suspension mit
— einem Kautschuk-Latex, einer Kautschuk-Lösung oder dessen wäßriger Emulsion
— einem wasserlöslichen Aluminiumsalz und
— Wasserglas
vereint und hierbei soviel Mineralsaure zusetzt, daß in der erhaltenen Mischung ein pH-Wert von 3,0 bis 3,7 eingehalten wird,
c) den anfallenden, füllstoffhaltigen SBR-Kautschuk von der wäßrigen Phase abtrennt und trocknet.

2. Thermoplastische Massen nach Anspruch 1, dadurch gekennzeichnet, daß dem pulverförmigen füllstoffhaltigen Kautschuk ein E-SBR-Kautschuk zugrunde liegt.

3. Thermoplastische Massen nach Anspruch 1 oder 2, dadurch gekennzeichnet, daß der Massenanteil des pulverförmigen füllstoffhaltigen SBR-Kautschuks in den thermoplastischen Massen 0,5 bis 50 %, vorzugsweise 10 bis 25 %, beträgt.

4. Thermoplastische Massen nach den Ansprüchen 1 bis 3, dadurch gekennzeichnet, daß der Kautschukanteil des pulverförmigen füllstoffhaltigen SBR-Kautschuks zu 15 bis 40 %, vorzugsweise zu 20 bis 25 %, aus polymerisierten Styroleinheiten und der Rest aus polymerisierten Butadieneinheiten besteht.

5. Thermoplastische Massen nach den Ansprüchen 1 bis 4, dadurch gekennzeichnet, daß der pulverförmige SBR-Kautschuk als Füllstoff Ruß enthält.

6. Thermoplastische Massen nach den Ansprüchen 4 und/oder 5, dadurch gekennzeichnet, daß der Anteil des Füllstoffs im eingesetzten pulverförmigen füllstoffhaltigen SBR-Kautschuk zwischen 10 und 80, vorzugsweise zwischen 30 und 60 Massenprozent liegt.

7. Thermoplastische Massen nach den Ansprüchen 1 bis 6, dadurch gekennzeichnet, daß das größte Volumen eines füllstoffhaltigen Kautschukteilchens unter 30 $\mu m^3$, vorzugsweise unter 10 $\mu m^3$, liegt.

8. Thermoplastische Massen nach Anspruch 7, dadurch gekennzeichnet, daß das größte Volumen unter 1 $\mu m^3$ liegt.

9. Thermoplastische Massen nach den Ansprüchen 1 bis 8, dadurch gekennzeichnet, daß diese Massen bis zu 50 % eines Verstärkungsmittels und/oder bis zu 15 % eines Flammschutzmittels, jeweils bezogen auf die gesamte Formmasse, enthalten.

10. Thermoplastische Massen nach Anspruch 9, dadurch gekennzeichnet, daß diese Massen weitere Zusatzstoffe in Mengen bis zu insgesamt 5 %, bezogen auf die gesamte Formmasse, enthalten.

11. Verfahren zur Herstellung der thermoplastischen Massen nach den Ansprüchen 1 bis 10, dadurch gekennzeichnet, daß die Komponenten vermischt und in einem Kneter umgeschmolzen werden.

12. Verfahren zur Herstellung der thermoplastischen Massen nach den Ansprüchen 1 bis 10, dadurch gekennzeichnet, daß eine Schmelze aus Polyphenylenethern und Styrolhomopolymerisaten bei 200 bis 300 °C mit dem pulverförmigen füllstoffhaltigen Kautschuk, dem Verstärkungs- und Flammschutzmittel und den weiteren Zusatzstoffen versetzt wird.

**Claims**

1. A thermoplastic moulding material from a mixture of polyphenylene ether(s), polystyrene and rubber, filler(s) and further additive(s), characterized in that the blend contains,
— polyphenylene ether(s),
— styrene homopolymer(s) and
— a pulverulent SBR rubber,
this rubber containing carbon black, silica and/or silicate(s) as filler(s) and being obtained by
a) adding mineral acid to a filler suspension in an amount such that, after the subsequent addition of a water-soluble aluminium salt and of waterglass, a pH of 3.0 to 3.7 is obtained,
b) combining this filler suspension with
— a rubber latex, a rubber solution or its aqueous emulsion,
— a water-soluble aluminium salt and
— waterglass
and, during this procedure, adding mineral acid in an amount such that a pH of 3.0 to 3.7 is maintained in

the mixture obtained, and

c) separating off the resulting, filler-containing SBR rubber from the aqueous phase and drying it.

2. A thermoplastic material according to claim 1, characterized in that the pulverulent filler-containing rubber is based on a E-SBR rubber.

3. A thermoplastic material according to claim 1 or 2, characterized in that the thermoplastic material contains the pulverulent filler-containing SBR rubber in an amount of 0.5 to 50 % by weight, preferably 10 to 25 % by weight.

4. A thermoplastic material according to any of claims 1 to 3, characterized in that the rubber component of the pulverulent filler-containing SBR rubber consists to the extent of 15 to 40 %, preferably 20 to 25 % of polymerized styrene units, the remainder being polymerized butadiene units.

5. A thermoplastic material according to any of claims 1 to 4, characterized in that the pulverulent SBR rubber contains carbon black as a filler.

6. A thermoplastic material according to claims 4 and/or 5, characterized in that the proportion of filler in the pulverulent filler-containing SBR rubber used is between 10 and 80, preferably between 30 and 60, % by weight.

7. A thermoplastic material according to any of claims 1 to 6, characterized in that the largest volume of a filler-containing rubber particle is less than 30 $\mu m^3$, preferably less than 10 $\mu m^3$.

8. A thermoplastic material according to Claim 7, characterized in that the largest volume is less than 1 $\mu m^3$.

9. A thermoplastic material according to any of claims 1 to 8, characterized in that this material contains up to 50 % of a reinforcing agent and/or up to 15 % of a flame-retarding agent, in each case relative to the total moulding material.

10. A thermoplastic material according to claim 9, characterized in that this material contains further additive(s) in amount(s) up to a total of 5 %, relative to the total moulding material.

11. A process for the preparation of the thermoplastic material(s) according to any of claims 1 to 10, characterized in that the components are mixed, and are remelted in a kneader.

12. A process for the preparation of the thermoplastic material(s) according to any of claims 1 to 10, characterized in that the pulverulent filler-containing rubber, the reinforcing agent and flame-retarding agent and the further additive(s) are added to a melt of polyphenylene ether(s) and styrene homopolymer(s) at 200 to 300 °C.

**Revendications**

1. Masses à mouler thermoplastiques, constituées de mélanges d'éthers polyphényléniques, de polystyrène et de caoutchouc, de charges et d'autres additifs, caractérisées par le fait que les mélanges contiennent :

— des éthers polyphényléniques,
— des produits d'homopolymérisation du styrène,
— un caoutchouc SBR pulvérulent,

ce caoutchouc contenant comme charges de la suie, de l'acide silicique et/ou des silicates, et étant obtenu :

a) en ajoutant à une suspension de charge une quantité d'acide minéral telle que, après addition subséquente d'un sel d'aluminium soluble dans l'eau et de verre soluble, on atteigne un pH d'une valeur de 3,0 à 3,7,

b) en incorporant à cette suspension de charge :

— un latex de caoutchouc, une solution de caoutchouc ou une émulsion aqueuse de celui-ci,
— un sel d'aluminium soluble dans l'eau et
— du verre soluble,

et en ajoutant en même temps une quantité d'acide minéral telle qu'une valeur de pH de 3,0 à 3,7 soit maintenue dans le mélange obtenu.

c) en séparant de la phase aqueuse le caoutchouc SBR qui se forme et qui contient une charge, puis en le séchant.

2. Masses thermoplastiques selon la revendication 1, caractérisées par le fait qu'un caoutchouc E-SBR sert de base au caoutchouc pulvérulent contenant une charge.

3. Masses thermoplastiques selon la revendication 1 ou 2, caractérisées par le fait que la proportion en masse de caoutchouc SBR pulvérulent contenant une charge dans les masses thermoplastiques est de 0,5 à 50 %, de préférence 10 à 25 %.

4. Masses thermoplastiques selon les revendications 1 à 3, caractérisées par le fait que la fraction caoutchouteuse du caoutchouc SBR pulvérulent contenant une charge, est constituée pour 15 à 40 %, de préférence pour 20 à 25 %, d'unités styrènes polymérisées, le reste étant formé d'unités de butadiène polymérisées.

5. Masses thermoplastiques selon les revendications 1 à 4, caractérisées par le fait que le caoutchouc SBR pulvérulent contient comme charge de la suie.

6. Masses thermoplastiques selon les revendications 4 et/ou 5, caractérisées par le fait que la

proportion de la charge dans le caoutchouc SBR pulvérulent, contenant une charge, qui est utilisé se situe entre 10 et 80, de préférence entre 30 et 60 % en masse.

7. Masses thermoplastiques selon les revendications 1 à 6, caractérisées par le fait que le volume le plus important d'une particule de caoutchouc contenant une charge est inférieur à 30 $\mu m^3$, de préférence inférieur à 10 $\mu m^3$.

8. Masses thermoplastiques selon la revendication 7, caractérisées par le fait que le volume le plus important est inférieur à 1 $\mu m^3$.

9. Masses thermoplastiques selon les revendications 1 à 8, caractérisées par le fait que ces masses contiennent jusqu'à 50 % d'un agent de renforcement et/ou jusqu'à 15 % d'un agent ignifugeant, chaque pourcentage étant relatif à la masse à mouler totale.

10. Masses thermoplastiques selon la revendication 9, caractérisées par le fait que ces masses contiennent d'autres additifs dans des quantités allant jusqu'à 5 % au total, relativement à la masse à mouler totale.

11. Procédé de préparation des masses thermoplastiques selon les revendications 1 à 10, caractérisé par le fait qu'on mélange les composants et qu'on les fait fondre à nouveau dans un pétrin.

12. Procédé de préparation des masses thermoplastiques selon les revendications 1 à 10, caractérisé par le fait qu'à une masse fondue constituée par des éthers polyphényléniques et par des produits d'homopolymérisation du styrène, on ajoute, à une température de 200 à 300 °C, le caoutchouc pulvérulent contenant une charge, l'agent de renforcement et l'agent ignifugeant, puis les autres additifs.

Abb. 1

10 000 fache Vergrößerung eines Dünnschnitts (Dicke 50 mm) einer Formmasse, die gemäß Beispiel 5 erhalten wurde. (Die Aufnahme wurde mit Hilfe eines Transmissionselektronenmikroskops gewonnen.)

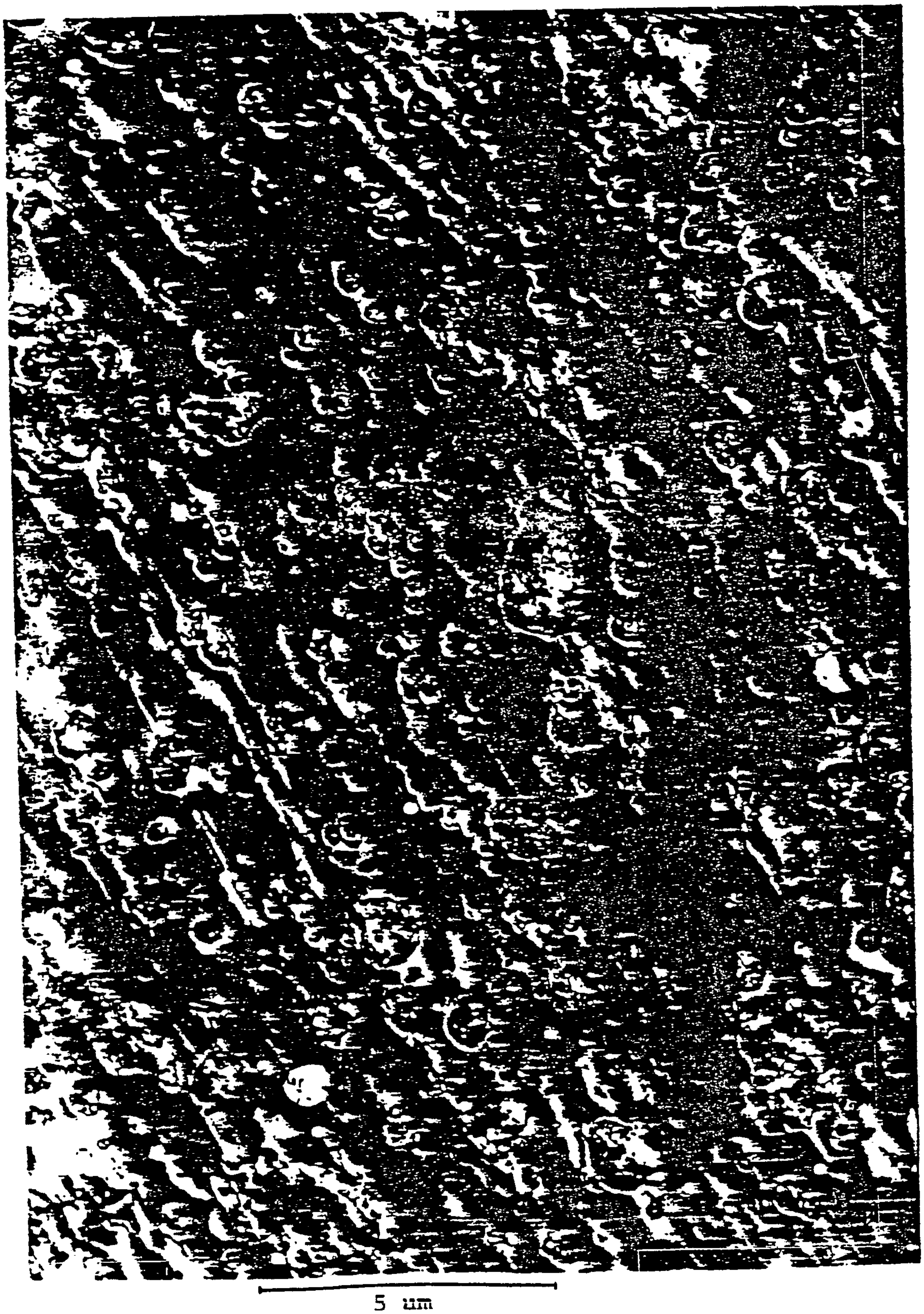

5 um